# EUROPEAN PATENT APPLICATION

(11) **EP 1 849 358 A1**
(43) Date of publication of application: **31.10.2007**
(21) Application number: 06799641.3
(22) Date of filing: 03.08.2006
(51) Int. Cl.: A01N 25/10, A01P 11/00

(54) **RODENTICIDE AGENT**

(30) Priority: 26.02.2006 RU 2006106666
(71) Applicant: Pokholkov, Aleksej Yurevich, St. Petersburg 191002 (RU)
(72) Inventor: Pokholkov, Aleksej Yurevich, St. Petersburg 191002 (RU)
(74) Representative: Schneider, Henry
(86) International application number: PCT/RU2006/000422
(87) International publication number: WO 2007/097656

(57) **Abstract**

The invention relates to agents for destroying mouse-like rodents and can be used for deratization of premises and in agriculture.

It is an object of the present invention to provide a solution for creating a rodenticide agent that reduces the risk of polluting the environment with poisonous substances while extending the endurable range of humidity, temperature and mechanical stress, and increases the attractiveness of the rodenticide agent for rodents.

According to the present invention the rodenticide agent comprises an active substance, an attractant, a colorant, a human and pet repellent, and a binding component embodied as a thermoplastic, and the rodenticide agent comprises its components at the following ratio, % of total mass:
the active substance 0.002 - 10
the attractant 40 - 85
the colorant 0.005 - 0.05
the human and pet repellent 0.001 - 0.02
the binding component - the remainder.

## Description

### Technical field

The invention relates to agents for destroying mouse-like rodents and can be used for deratization of premises and in agriculture.

### Background art

A known rodenticide agent comprises an active substance embodied as an insecticide, an attractant (bait), a binding component and water, RU, C2, 2196425.

The disadvantage of this rodenticide agent is in that the binding component is embodied as flour gluten. Upon contact with moisture such binding component actively absorbs the moisture, whereupon the rodenticide agent loses its shape and quickly disintegrates, releasing the toxic active substance into the environment. Even if the humidity is not very pronounced, the rodenticide agent becomes crumbled when gnawed, whereupon it is widely spread by animals, humans and the wind.

Another known rodenticide agent comprises a binding substance (filling material) and an active substance embodied as diphenacine. The agent is a coating that can be applied along the path used by rodents. The binding (filling) substance is embodied as a mixture of polyethylene glycol and ethylene glycol or as a mixture of petrolatum and petrolatum oil, RU, C, 1441505. This rodenticide agent is embodied as a paste that sticks to the animal and enters its organism when the animal licks itself, thus causing the death of the rodent.

The disadvantage of this engineering solution is in that it becomes widely spread in the environment during its use.

Yet another known rodenticide agent comprises an active substance (brodifacoum, difenacoum, flocumafen), an attractant (corn), a human and pet repellent (Bitrex), a colorant and a binding component embodied as wax and/or paraffin, WO, 9301712. This rodenticide agent can be embodied as blocks, plates and tablets.

This engineering solution is taken as a prototype of the present invention.

The disadvantage of said solution is in its low heat resistance. Temperatures above +25°C cause the softening of the binding component, the deformation of the blocks, the uncovering of the attractant and the active substance. Prolonged contact with water destroys the structure of the blocks as well, whereupon the active substance enters the environment. Furthermore, the mechanical strength of the blocks is low and is determined by the low strength of the binding component embodied as wax and/or paraffin, which constitutes a serious hazard in case of unforeseen destruction of the rodenticide agent through mechanical influence. It should also be noted that the incisors of synanthropic mouse-like rodents grow throughout their whole life, as it is for all rodents. The growing rate can reach 1 mm per day. This peculiarity makes the animals gnaw at hard objects throughout the larger part of their lives in order to grind off their incisors. We determined that, with all other conditions being equal, the rodenticide agents that remain hard upon influence of moisture, temperature and other environmental conditions will hold the most attraction for rodents. Therefore, the insufficient hardness of bricks made on the basis of paraffin or wax makes them of little attraction for rodents.

### Summary of the invention

It is an object of the present invention to provide a solution for creating a rodenticide agent that reduces the risk of polluting the environment with poisonous substances while extending the endurable range of humidity, temperature and mechanical stress, and increases the attractiveness of the rodenticide agent for rodents.

According to the present invention the rodenticide agent comprises an active substance, an attractant, a colorant, a human and pet repellent, and a binding component embodied as a thermoplastic, and the rodenticide agent comprises its components at the following ratio, % of total mass:
the active substance 0.002 - 10
the attractant 40 - 85
the colorant 0.005 - 0.05
the human and pet repellent 0.001 - 0.02
the binding component - the remainder.

The applicant hasn't found any source of information containing data on engineering solutions identical to the present invention. In applicant's opinion, this enables to conclude that the invention conforms to the criterion "Novelty" (N).

The novel features of the invention enable to achieve an important engineering result, which consists in that the rodenticide agent is provided with very important properties: high mechanical strength, moisture resistance, ability to preserve its shape (avoid softening) at high temperatures of the environment (up to 60°C). A significant increase in hardness is very attractive for rodents, while hampering or completely preventing the gnawing of the agent by pets. As opposed to known analogs, the risk of polluting the environment with the active (poisonous) substance is considerably reduced, almost minimized.

The applicant hasn't found any source of information containing data on the influence of the inventive novel features on the engineering result produced through the realization of said features, i.e. on the increase in the rodenticide agent's attractiveness for rodents or on the reduction of risk of polluting the environment with poisonous substances. In applicant's opinion, this enables to conclude that the invention conforms to the criterion "Inventive Step" (IS).

### Brief description of the drawings

The present invention is further explained, by way of example, without references to any drawings.

### Preferred embodiment

Table 1 contains data on mixtures (NN 1-30) having different percentage of components.

Table 2 contains data on physical and mechanical properties of the mixtures from Table 1.

Table 3 contains data on the efficiency of the mixtures from Table 1 against synanthropic rodents: house mice and common rats.

Samples 6, 13, 18, 24, 30 use zinc phosphide as the active substance. Samples 1, 2, 7, 8, 13, 14, 19, 20, 25, 26 use diphetialone, samples 5, 11, 17, 23, 29 use megestrole acetate, and the remaining samples use bromodialone.

Diphetialone and bromodialone have fairly high cumulative effect in the organism of the rodent, which results in the death of the animal.

The use of strong poisons, in particular zinc phosphide, reduces the time elapsed from the moment when the rodent eats the bait until the moment of his death.

The synthetic hormone megestrole acetate affects the hypothalamic-pituitary system, thus oppressing the reproductive function.

The samples use corn, rice hulls or bone flour as an attractant. Chrome-phtal red 2030 or EA 33 are used as colorants.

Bitrex or denatonium saccharide are used as a human and pet repellent.

The following thermoplastics are used as a binding component in the samples: high-strength polyethylene (HSPE), polypropylene (PP), polyvinyl chloride (PVC), polystyrene (PS), polyamide (PA), copolymer of ethylene and vinyl acetate (CEV) - covilene 11104-030.

For all samples the rodenticide agent was created in the following way: an active substance, a human and pet repellent and a colorant were inserted into an attractant that had been ground to 0.5 mm size and sifted. This was achieved by using a SMCH-600 blender at rotation speed of 50 rpm during 40 minutes at a temperature of 20°C. Then the mixture was dried for 5 hours in a draft hood at a temperature of 80°C until the residual moisture was reduced to no more than 1.5%. Then the dried mixture was mixed with the binding component composed of elements of 0.3-1.0 mm in size and having residual moisture of no more than 0.5%. Then the produced mixture was thermally moulded into bricks 20×40×80 m in size or into cylindrical granules 5 mm in diameter and 15 mm in length.

Thus, the rodenticide agent is a block in the shape of a matrix (the base) made from a polymeric material - a thermoplastic. Cavities are created along the whole volume of the matrix, wherein the active substance is located in said cavities.

The bricks or granules are positioned at the places where the rodents live.

### Industrial applicability

Known simple industrial equipment and materials common in the art are used for the realization of the invention, which in applicant's opinion enables to conclude that the invention conforms to the criterion "Industrial Applicability" (IA).

**Table 1**

| Nº of sample | Components of the rodenticide agent, % of total mass | | | | | | | | | |
|---|---|---|---|---|---|---|---|---|---|---|
| | Active substance | | Attractants | | Colorants | | Human and pet repellents | | Binding component-thermoplastics * | |
| 1 | 2 | 3 | 4 | 5 | 6 | 7 | 8 | 9 | 10 | 11 |
| 1 | D | 0,002 | C | 30 | Ch | 0,1 | Ds | 0,0004 | HSPE | 69,90 |
| 2 | D | 0,002 | S | 30 | Ch | 0,1 | Ds | 0,0004 | PP | 69,90 |
| 3 | B | 0,002 | R | 30 | Ch | 0,1 | Ds | 0,0004 | PVC | 69,90 |
| 4 | B | 0,002 | C | 30 | E | 0,1 | Ds | 0,0004 | PS | 69,90 |
| 5 | B | 0,002 | S | 30 | E | 0,1 | Ds | 0,0004 | PA | 69,90 |
| 6 | P | 0,002 | R | 30 | E | 0,1 | Ds | 0,0004 | CEV | 69,90 |
| 7 | D | 5 | C | 82 | Ch | 0,5 | Bi | 0,003 | HSPE | 12,50 |
| 8 | D | 5 | S | 82 | Ch | 0,5 | Bi | 0,003 | PP | 12,50 |
| 9 | B | 5 | R | 82 | Ch | 0,5 | Bi | 0,003 | PVC | 12,50 |
| 10 | B | 5 | C | 82 | E | 0,5 | Bi | 0,003 | PS | 12,50 |
| 11 | B | 5 | S | 82 | E | 0,5 | Bi | 0,003 | PA | 12,50 |
| 12 | P | 5 | R | 82 | E | 0,5 | Bi | 0,003 | CEV | 12,50 |
| 13 | D | 0,0035 | C | 64,95 | Ch | 0,3 | Bi | 0,0015 | HSPE | 34,75 |
| 14 | D | 0,0035 | S | 64,95 | Ch | 0,3 | Bi | 0,0015 | PP | 34,75 |
| 15 | B | 0,0035 | R | 64,95 | Ch | 0,3 | Bi | 0,0015 | PVC | 34,75 |
| 16 | B | 0,0035 | C | 64,95 | E | 0,3 | Bi | 0,0015 | PS | 34,75 |
| 17 | B | 0,0035 | S | 64,95 | E | 0,3 | Bi | 0,0015 | PA | 34,75 |
| 18 | P | 0,0035 | R | 64,95 | E | 0,3 | Bi | 0,0015 | CEV | 34,75 |
| 19 | D | 6 | C | 85 | Ch | 0,6 | Bi | 0,01 | HSPE | 8,39 |
| 20 | D | 6 | S | 85 | Ch | 0,6 | Bi | 0,01 | PP | 8,39 |
| 21 | B | 6 | R | 85 | Ch | 0,6 | Bi | 0,01 | PVC | 8,39 |
| 22 | B | 6 | C | 85 | E | 0,6 | Bi | 0,01 | PS | 8,39 |
| 23 | B | 6 | S | 85 | E | 0,6 | Bi | 0,01 | PA | 8,39 |
| 24 | P | 6 | R | 85 | E | 0,6 | Bi | 0,01 | CEV | 8,39 |
| 25 | D | 0,0015 | C | 20 | Ch | 0,05 | Ds | 0,0001 | HSPE | 79,95 |
| 26 | D | 0,0015 | S | 20 | Ch | 0,05 | Ds | 0,0001 | PP | 79,95 |
| 27 | B | 0,0015 | R | 20 | Ch | 0,05 | Ds | 0,0001 | PVC | 79,95 |
| 28 | B | 0,0015 | C | 20 | E | 0,05 | Ds | 0,0001 | PS | 79,95 |
| 29 | B | 0,0015 | S | 20 | E | 0,05 | Ds | 0,0001 | PA | 79,95 |
| 30 | P | 0,0015 | R | 20 | E | 0,05 | Ds | 0,0001 | CEV | 79,95 |

| | | | | | | | | | | |
|---|---|---|---|---|---|---|---|---|---|---|
| Note: D diphetialone B bromodialone P zinc phosphide C corn S sawdust R rice hulls Ds denatonium saccharide Bi Bitrex (denatonium benzoate) Ch chromo-phtal red 2030 E EA33 * The binding component is embodied as initial or waste thermoplastic polymers and/or mixtures thereof having processing temperature lower than the thermal-oxidative degradation temperature of other components. HSPE high-strength polyethylene (HSPE) of brand PEND173 PP polypropylene of brand Caplen 1030 PVC polyvinyl chloride of brand PVC-S-6558U-LP PS polystyrene of brand PS 104D Stairovit PA polyamide of brand PA-6 CEV covilene of brand 11104-030 | | | | | | | | | | |

**Table 2**

| Nº of sample | Physical and mechanical properties of the materials | | | |
|---|---|---|---|---|
| | Density, g/cubic cm | Bending strength, MPa | Water absorption during 24 hours | Plasticization temperature, °C |
| 1 | 2 | 3 | 4 | 5 |
| 1 | 1,83 | 53,40 | 2.10 | 125 |
| 2 | 1,78 | 52,60 | 2,23 | 130 |
| 3 | 1,81 | 53,90 | 2,20 | 75 |
| 4 | 1,69 | 51,40 | 2,48 | 95 |
| 5 | 1,54 | 53,49 | 2,08 | 105 |
| 6 | 1,64 | 52,56 | 2,37 | 85 |
| 7 | 1,23 | 34,68 | 3,30 | 125 |
| 8 | 1,17 | 37,58 | 3,54 | 130 |
| 9 | 1,15 | 35,60 | 3,20 | 75 |
| 10 | 1,19 | 34.95 | 3,24 | 95 |
| 11 | 1,21 | 36.85 | 3,15 | 105 |
| 12 | 1,45 | 36.50 | 3,23 | 85 |
| 13 | 1,47 | 52,35 | 2,20 | 125 |
| 14 | 1,43 | 51,67 | 2,50 | 130 |
| 15 | 1,44 | 51,80 | 2,32 | 75 |
| 16 | 1,42 | 51,60 | 2,40 | 95 |
| 17 | 1,44 | 50,80 | 2,50 | 105 |
| 18 | 1,43 | 51,30 | 2,45 | 85 |
| 19 | 1,17 | 30,40 | 1,90 | 125 |
| 20 | 1,15 | 29.90 | 10 | 130 |
| 21 | 1,19 | 32,10 | 15 | 75 |
| 22 | 1,11 | 30,40 | 1,98 | 95 |
| 23 | 1,25 | 30,70 | 2.00 | 105 |
| 24 | 1,20 | 31,80 | 2,17 | 85 |
| 25 | 1,93 | 53,90 | 2,90 | 125 |
| 26 | 1,88 | 53.60 | 2,83 | 130 |
| 27 | 1,89 | 54,90 | 2,78 | 75 |
| 28 | 1,79 | 54,40 | 2,98 | 95 |
| 29 | 1,84 | 53,90 | 2,98 | 105 |
| 30 | 1,74 | 53,56 | 2.97 | 85 |

**Table 3**

| Nº of sample | Rodent species | Eaten bait, % from daily ration of the animals | Animals dead | Day of death | |
|---|---|---|---|---|---|
| | | | | From-to | Average value |
| 1 | 2 | 3 | 4 | 5 | 6 |
| 1 | Common rats | 38 | 80 | 9-12 | 11 |
| | House mice | 35 | 80 | 8-10 | 9 |
| 2 | Common rats | 40 | 80 | 10-14 | 12 |
| | House mice | 37 | 80 | 10-13 | 12 |
| 3 | Common rats | 42 | 80 | 8-11 | 10 |
| | House mice | 30 | 80 | 7-11 | 9 |
| 4 | Common rats | 37,5 | 80 | 10-14 | 12 |
| | House mice | 39 | 80 | 11-15 | 13 |
| 5 | Common rats | 41 | 0 | 0 | 0 |
| | House mice | 39 | 0 | 0 | 0 |
| 6 | Common rats | 40 | 80 | 1-3 | 2 |
| | House mice | 36 | 80 | 1-4 | 2 |
| 7 | Common rats | 58,5 | 100 | 3-6 | 5 |
| | House mice | 63,4 | 100 | 3-7 | 5 |
| 8 | Common rats | 70,5 | 100 | 5-7 | 6 |
| | House mice | 76,1 | 100 | 5-6 | 5 |
| 9 | Common rats | 82,7 | 100 | 4-8 | 6 |
| | House mice | 89,1 | 100 | 4-9 | 7 |
| 10 | Common rats | 75,5 | 100 | 5-8 | 7 |
| | House mice | 70,1 | 100 | 4-7 | 6 |
| 11 | Common rats | 76,1 | 0 | 0 | 0 |
| | House mice | 72,1 | 0 | 0 | 0 |
| 12 | Common rats | 68,1 | 100 | 1-2 | 2 |
| | House mice | 74,1 | 100 | 1-2 | 2 |
| 13 | Common rats | 63 | 100 | 5-7 | 6 |
| | House mice | 65 | 100 | 4-7 | 5 |
| 14 | Common rats | 64,5 | 100 | 9-11 | 10 |
| | House mice | 67 | 100 | 9-12 | 11 |
| 15 | Common rats | 69,1 | 100 | 4-8 | 6 |
| | House mice | 66,2 | 100 | 5-9 | 7 |
| 16 | Common rats | 64 | 100 | 9-14 | 12 |
| | House mice | 65 | 100 | 10-15 | 13 |
| 17 | Common rats | 66,3 | 0 | 0 | 0 |
| | House mice | 69 | 0 | 0 | 0 |
| 18 | Common rats | 64,8 | 100 | 1 | 1 |
| | House mice | 62,1 | 100 | 1-2 | 1 |
| 19 | Common rats | 63 | 100 | 3-6 | 4 |
| | House mice | 68 | 100 | 3-7 | 5 |
| 20 | Common rats | 67,5 | 100 | 5-7 | 6 |
| | House mice | 67 | 100 | 5-6 | 5 |
| 21 | Common rats | 69,1 | 100 | 4-8 | 6 |
| | House mice | 68,2 | 100 | 4-9 | 7 |
| 22 | Common rats | 64,9 | 100 | 5-8 | 7 |
| | House mice | 65,6 | 100 | 4-7 | 6 |
| 23 | Common rats | 68,3 | 0 | 0 | 0 |
| | House mice | 69,1 | 0 | 0 | 0 |
| 24 | Common rats | 64,8 | 100 | 1-2 | 2 |
| | House mice | 64,1 | 100 | 1-2 | 2 |
| 25 | Common rats | 33 | 60 | 7-11 | 9 |
| | House mice | 35 | 60 | 8-10 | 9 |
| 26 | Common rats | 31 | 60 | 10-16 | 13 |
| | House mice | 30 | 60 | 10-15 | 13 |
| 27 | Common rats | 33,7 | 60 | 8-11 | 9 |
| | House mice | 30 | 60 | 9-11 | 10 |
| 28 | Common rats | 37,5 | 60 | 10-14 | 12 |
| | House mice | 35 | 60 | 10-16 | 13 |
| 29 | Common rats | 41 | 0 | 0 | 0 |
| | House mice | 39 | 0 | 0 | 0 |
| 30 | Common rats | 40 | 60 | 1-2 | 2 |
| | House mice | 36 | 60 | 1-3 | 2 |

## Claims

1. A rodenticide agent, comprising an active substance, an attractant, a colorant, a human and pet repellent, and a binding component, **characterized in that** said binding component is embodied as a thermoplastic, and the rodenticide agent comprises its components at the following ratio, % of total mass:
the active substance 0.002 - 10
the attractant 40 - 85
the colorant 0.005 - 0.05
the human and pet repellent 0.001 - 0.02
the binding component - the remainder.
